# EUROPEAN PATENT APPLICATION

(11) **EP 4 822 508 A1**
(43) Date of publication of application: **14.10.2026**
(21) Application number: 25745505.5
(22) Date of filing: 06.01.2025
(51) Int. Cl.: G06F 3/04845, G06T 11/60, G06T 7/13, H04R 1/10, G06F 3/01, G06F 3/16, G06F 3/0488, G06N 20/00, G06F 3/041, G06F 16/951

(54) **ELECTRONIC DEVICE AND IMAGE EDITING METHOD FOR ELECTRONIC DEVICE**

(30) Priority: 26.01.2024 KR 20240012346; 07.03.2024 KR 20240032560
(71) Applicant: Samsung Electronics Co., Ltd., Suwon-si, Gyeonggi-do 16677 (KR)
(72) Inventor: MUN, Jihun, Suwon-si, Gyeonggi-do 16677 (KR); KIM, Moonsoo, Suwon-si, Gyeonggi-do 16677 (KR); NAM, Sungguk, Suwon-si, Gyeonggi-do 16677 (KR); YANG, Chulju, Suwon-si, Gyeonggi-do 16677 (KR); YOO, Nagyeom, Suwon-si, Gyeonggi-do 16677 (KR)
(74) Representative: Gulde & Partner
(86) International application number: PCT/KR2025/000255
(87) International publication number: WO 2025/159397

(57) **Abstract**

This electronic device may comprise: a memory for storing instructions; a display; and a processor. The instructions, when executed by the processor, may cause the electronic device to: determine a keyword corresponding to a first user input on the basis of reception of the first user input; obtain at least one image through crawling on the basis of the determined keyword; determine at least one graphical object corresponding to the at least one image; receive a second user input related to the at least one graphical object; and generate an artificial intelligence image using a machine learning model on the basis of any one of the second user input or information about the at least one graphical object.

## Description

### [Technical Field]

The disclosure relates to an electronic device, and relates to an image editing method of an electronic device.

### [Background Art]

Recently, artificial intelligence (AI) technology has been advancing at a fast pace. In particular, with the evolution of AI technology, generative AI technology is rapidly growing. Generative AI may refer to AI technology that utilizes machine learning and deep learning techniques to create new and similar content, based on existing content, such as text, audio, and/or images. For example, generative AI may generate new content, based on previously learned data, and may also be applied to operations of improving the quality of an image or editing a video.

AI content (e.g., an image or a video) regenerated based on generative AI may yield results in which only a portion, rather than the entire area, is generated by AI. For instance, AI content that is at least partially generated may include real data and fake data.

The above information may be provided as related art to assist in an understanding of the disclosure. No determination or no assertion is made as to whether any of the above might be applicable as prior art with regard to the disclosure.

### [Disclosure of Invention]

### [Technical Problem]

When generating a new object image on an image including an object or on an empty screen (e.g., a canvas), it may take a relatively long time for a machine learning model to generate an image from scratch. Further, an image generated by the machine learning model may fail to meet a user's intent.

In addition, when generating an image by relying only on a generative model without crawling, it is difficult to obtain an image desired by a user due to dependency on learned data. An electronic device according to the disclosure may provide guidance such that a user may generate an intended image when the user wishes to generate a new object image.

Technical aspects to be achieved in the disclosure are not limited to the aspects mentioned above, and may be variously expanded without departing from the idea and scope of the disclosure.

According to an embodiment, an electronic device may include a memory storing instructions, a display, and a processor. The instructions may, when executed by the processor, cause the electronic device to: determine a keyword corresponding to a first user input, based on the first user input being received; obtain at least one image through crawling, based on the determined keyword; determine at least one graphical object corresponding to the at least one image; receive a second user input related to the at least one graphical object; and generate an artificial intelligence (AI) image using a machine learning model, based on the second user input or information about the at least one graphical object.

According to an embodiment, an operating method may include determining a keyword corresponding to a first user input, based on the first user input being received, obtaining at least one image through crawling, based on the determined keyword, determining at least one graphical object corresponding to the at least one image, receiving a second user input related to the at least one graphical object, and generating an artificial intelligence (AI) image using a machine learning model, based on the second user input or information about the at least one graphical object.

An electronic device according to the disclosure may generate an image according to user intent by using an edge-based drawing and a generative model when drawing a new object image or adding an object image to an existing image.

An electronic device according to the disclosure may provide a guide function to assist a user in easily and quickly generating an intended image when the user intends to generate a new object image.

An electronic device according to the disclosure may provide a user-intervention environment through an edge image detected based on a crawled image, helping a user in obtaining a desired image.

Advantageous effects obtainable from the disclosure are not limited to the effects mentioned above, and other effects not mentioned herein may be clearly understood from the following description by those skilled in the art to which the disclosure pertains.

### [Brief Description of Drawings]

FIG. 1 is a block diagram of an electronic device in a network environment according to various embodiments.
FIG. 2 is a block diagram of an electronic device according to various embodiments.
FIG. 3 illustrates components of an electronic device classified by function according to various embodiments.
FIG. 4A and FIG. 4B illustrate an embodiment of an image editing method of an electronic device.
FIG. 5A and FIG. 5B illustrate another embodiment of an image editing method of an electronic device.
FIG. 6 is a flowchart illustrating an image editing method of an electronic device according to various embodiments.
FIG. 7 is a flowchart illustrating an image editing method of an electronic device according to various embodiments.

### [Mode for the Invention]

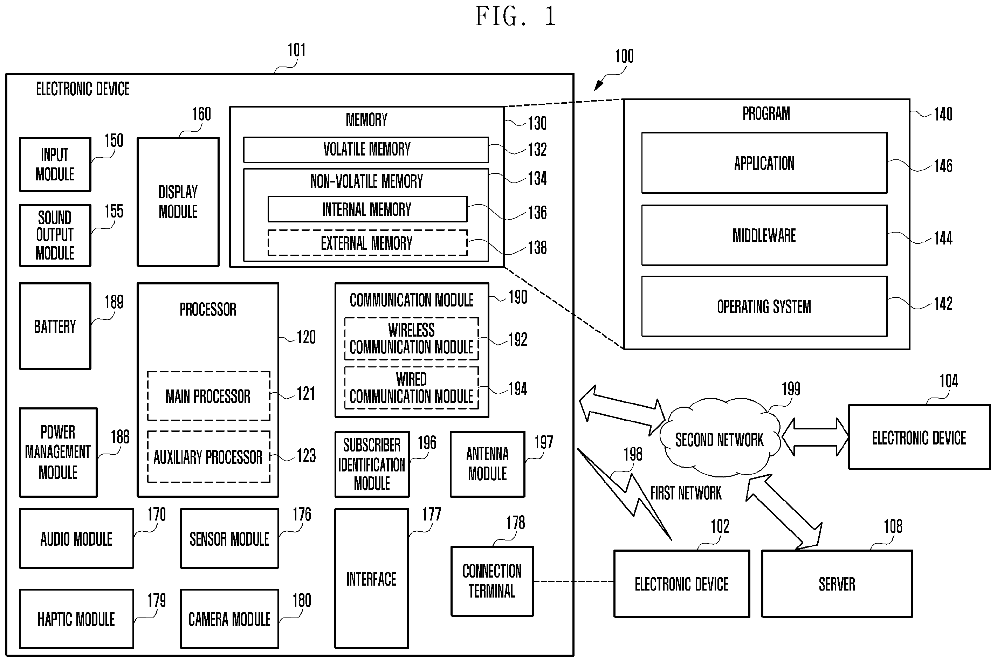

FIG. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of the same type as or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

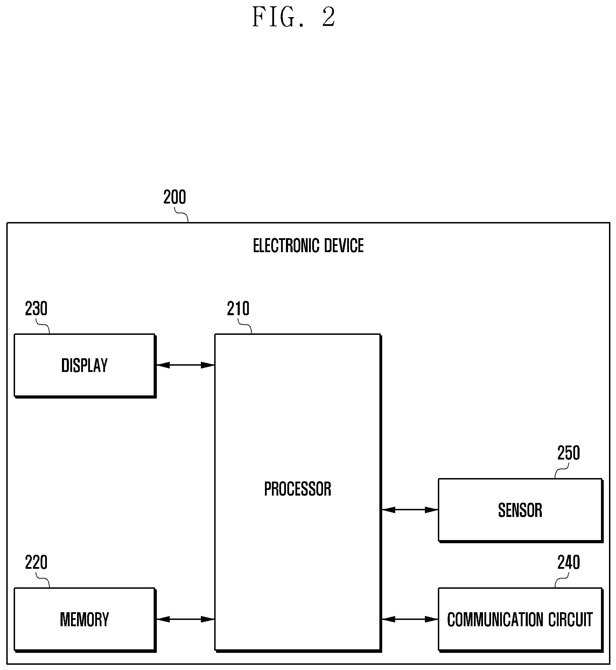

FIG. 2 is a block diagram of an electronic device according to various embodiments.

Referring to FIG. 2, the electronic device 200 may include a processor 210, a memory 220, a display 230, a communication circuit 240, and a sensor 250. Even though at least some of the illustrated components are omitted and/or replaced, embodiments of the disclosure may be implemented. The electronic device 200 may further include at least some of the components and/or functions of the electronic device 101 of FIG. 1.

Some components (e.g., the processor 210, the memory 220, and the communication circuit 240) among the components illustrated in FIG. 2 and/or other components of the electronic device 200 that are not illustrated may be disposed inside a housing (not shown) of the electronic device 200, and some components (e.g., the display 230) may be at least partially exposed outside the housing.

According to an embodiment, the display 230 may display content provided from the processor 210.

The display 230 may be disposed on a front surface of the electronic device 200, and the display 230 may include a rollable display. In a fully unfolded state of the electronic device 200, an execution screen of an application may be displayed on the entire surface of the electronic device 200. However, the display 230 is not limited to this form.

According to an embodiment, the display 230 may include a touch screen that detects a touch and/or proximity touch (or hovering) input using a body part (e.g., a finger) of a user or an input device (e.g., a stylus pen).

According to an embodiment, the electronic device 200 may include at least one sensor 250 that detects contact or proximity. For example, the electronic device 200 may include a type of short-range sensor that detects proximity or contact of an object, such as near-field communication (NFC), radio-frequency identification (RFID), Bluetooth (or Bluetooth Low Energy), or a touch sensor.

According to an embodiment, the at least one sensor 250 may be disposed in top, bottom, left, and right bezel areas of the display 230 and/or corner areas of the housing, respectively. Accordingly, when selecting an area to display main content or a background screen, the user may perform a touch or proximity input to a sensor 250 adjacent to an intended area. In various embodiments, the electronic device 200 may include one to five sensors 250 disposed at positions peripheral to the display 230.

According to an embodiment, the communication circuit 240 may provide a wired or wireless communication interface with an external device. For example, the communication circuit 240 may include a high-definition multimedia interface (HDMI) and a universal serial bus (USB) interface as examples of a wired communication interface (e.g., the interface 177 of FIG. 1). In addition, the communication circuit 240 may include a wireless communication circuit (e.g., the wireless communication circuit 192 of FIG. 1) supporting a short-range communication circuit with an external device. The wireless communication circuit may support a short-range wireless communication method (e.g., Wi-Fi, Bluetooth, and Bluetooth Low Energy (BLE)) and may include independent hardware and/or software components for supporting each wireless communication method.

According to an embodiment, the memory 220 may include a volatile memory and a nonvolatile memory to temporarily or permanently store data. The memory 220 may include at least some of the components and/or functions of the memory 130 of FIG. 1 and may store the program 140 of FIG. 1.

The memory 220 may store instructions executable by the processor 210. The instructions may include arithmetic and logical operations, data transfer, and control commands for input/output or the like recognizable by the processor 210.

According to an embodiment, the processor 210 is a component capable of performing operations for control and/or communication of each component of the electronic device 200 or data processing, and may include one or more processors 210. The processor 210 may include at least some of the components and/or functions of the processor 120 of FIG. 1. The processor 210 may be operatively, functionally, and/or electrically connected to each component of the electronic device 200 including the display 230, the memory 220, and the sensor 250.

According to an embodiment, there is no limitation on operations and data processing functions that the processor 210 is capable of implementing on the electronic device 200, but a function of providing an image that meets user intent by using edge-based drawing and a machine learning model will be described below.

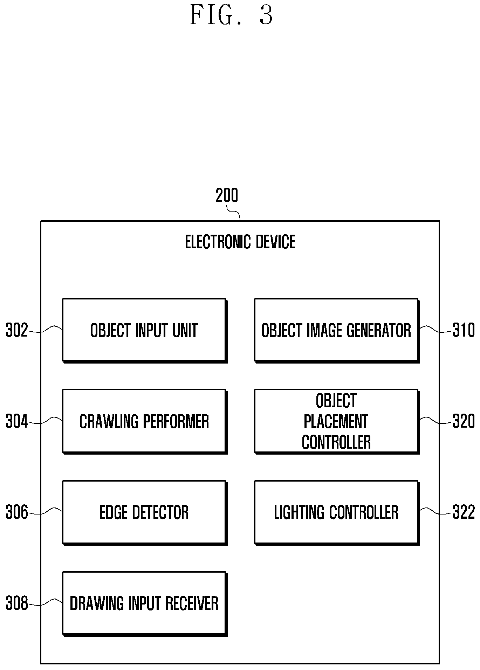

FIG. 3 illustrates components of an electronic device classified by function according to various embodiments.

In FIG. 3, the electronic device 200 may include components performing various functions and a machine learning model. The components illustrated in FIG. 3 may be physically separated and disposed on the electronic device 200, or may be included in a single processor (e.g., the processor 210 of FIG. 2).

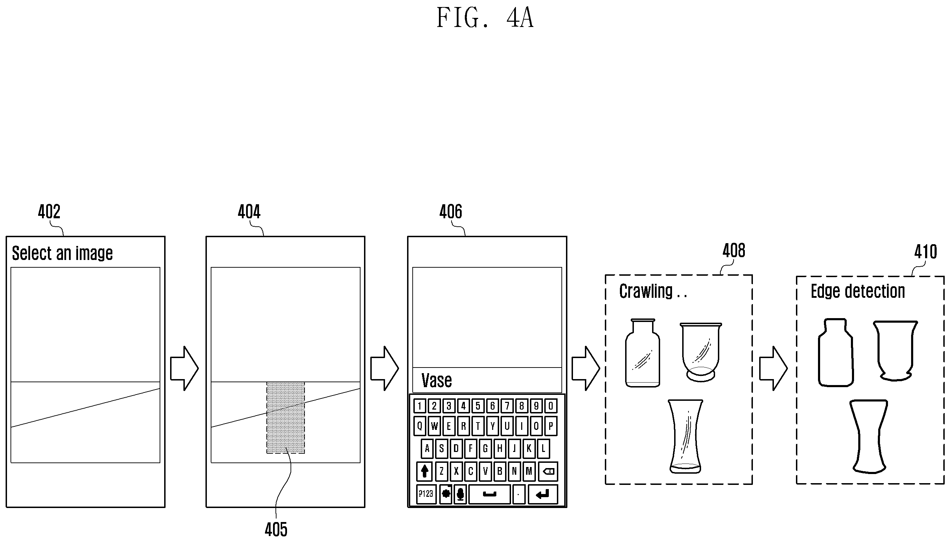

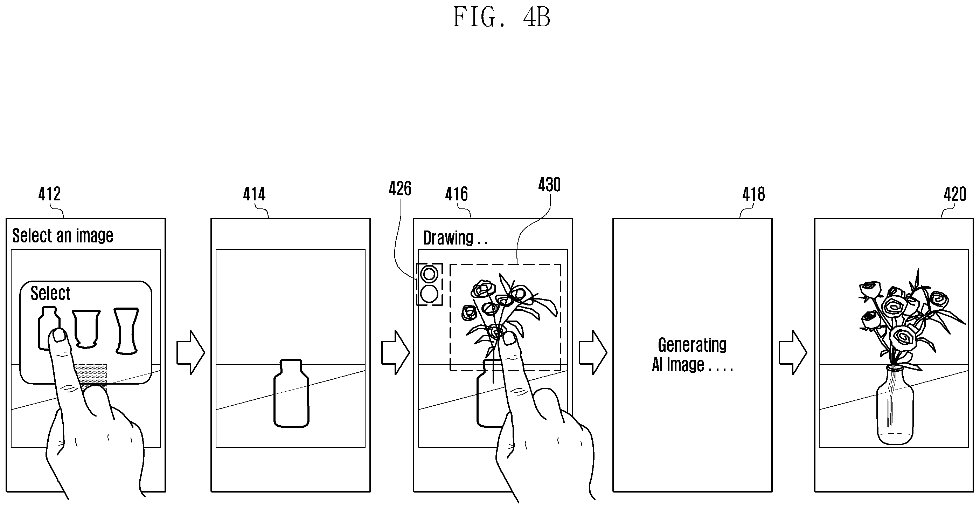

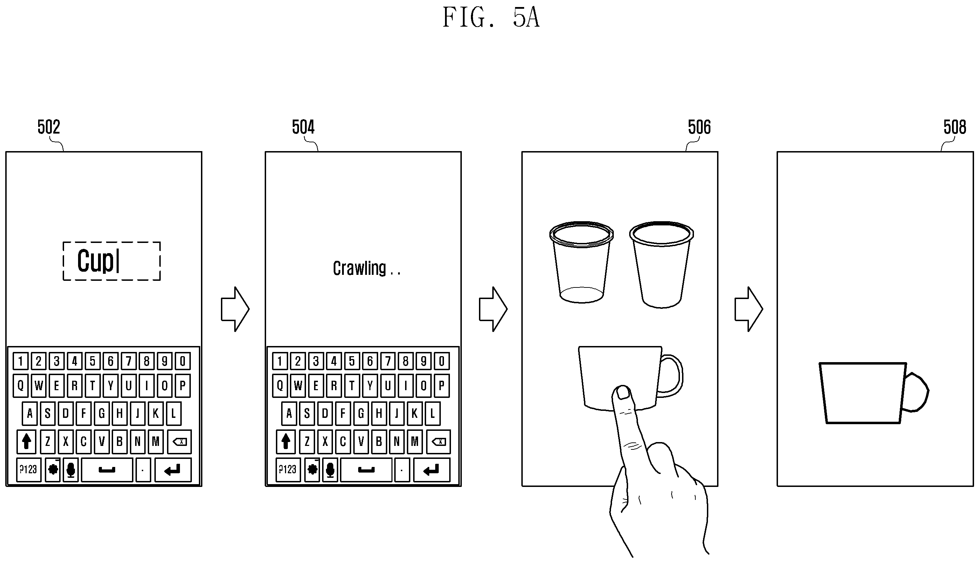

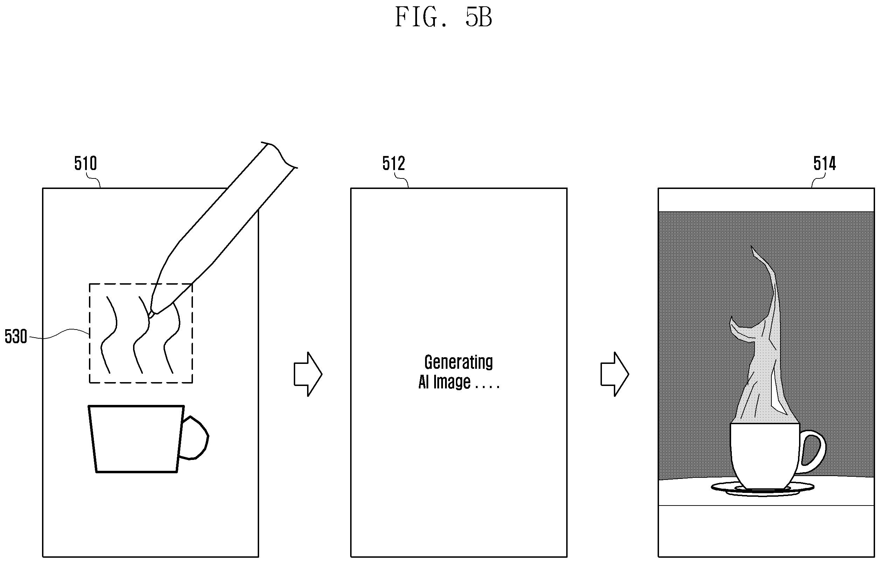

According to an embodiment, the electronic device 200 may determine an object word entered by a user by using an object input unit 302 to be generated under control of a processor 210. According to an embodiment, the electronic device 200 may receive a first user input and determine a keyword corresponding to the user input. The first user input may include one of a text input or a voice input. The keyword may include a word, for example, a vase or a cup. In FIGS. 4A and 4B, a description is made assuming that the keyword is a vase, which is merely an example, and the keyword is not limited thereto. In FIGS. 5A and 5B, a description is made assuming that the keyword is cup, which is merely an example, and the keyword is not limited thereto.

According to an embodiment, the electronic device 200 may provide an interface to receive natural language input of an object that the user wishes to add. The electronic device 200 may provide an object input interface, based on an object generation option being selected. The electronic device 200 may display a user interface (UI) in a form of a chat input window to enable natural language input of an object word to be generated.

According to an embodiment, the electronic device 200 may crawl an image corresponding to the keyword by using a crawling performer 304 under control of the processor 210. Crawling may refer to a process of regularly scanning web pages to extract information. Alternatively, the electronic device 200 may receive an image corresponding to the keyword from an external server (e.g., the server 108 of FIG. 1). The electronic device 200 may collect a large amount of information existing on the web through crawling. The electronic device 200 may collect an image corresponding to the keyword by using the crawling performer 304.

According to an embodiment, the electronic device 200 may perform edge detection on a collected image by using an edge detector 306 under control of the processor 210. Alternatively, the electronic device 200 may collect an image corresponding to the keyword by using the crawling performer 304, and may perform edge detection on all collected images by using the edge detector 306. The electronic device 200 may collect at least one image corresponding to the keyword, may display all collected images, and may request a user input. The electronic device 200 may determine one of the images, based on the user input, and may perform edge detection only on the selected image. The electronic device 200 may perform edge detection only on the selected image, thereby obtaining a first image.

Alternatively, the electronic device 200 may perform edge detection on all collected images. The electronic device 200 may display all images on which the edge detection has been performed, and may display an interface to request a user input. The electronic device 200 may select one of a plurality of edge images, based on a user input, and may determine the same as a first image.

An edge image according to various embodiments of the disclosure may refer to a representation that emphasizes a boundary of an object or an area where a change occurs within an image. Edge detection may refer to an operation of generating an edge image from an actual image. Specifically, edge detection may refer to an operation of identifying an area where at least one of color, brightness, and texture changes abruptly within an image. Edge detection may be used in various fields including object recognition, feature extraction, and image segmentation. The electronic device 200 may represent an original image with significantly reduced information by using an edge image.

According to an embodiment, the electronic device 200 may perform image data crawling online, based on the input keyword (e.g., vase). When crawling of images corresponding to an input word is completed, the electronic device 200 may perform edge detection on the crawled images. The electronic device 200 may configure a threshold to control an edge detection rate during a process of detecting an edge. For example, when the electronic device 200 provides an image in which a relatively large amount of edge information is detected, image generation time may relatively increase. In addition, when a relatively large amount of edge information is detected, an area in which the user may intervene on an edge image may relatively decrease. As a relatively large amount of edge information is detected, an image is represented in detail, and a relatively small amount of edge information is detected, an image is represented abstractly. To control edge information to be relatively less detected, the electronic device 200 may configure a relatively high threshold. The threshold may be expressed as % or as an absolute value between 0 and 1. The electronic device 200 may adjust the threshold to control degree to which edge information is detected.

According to an embodiment, the electronic device 200 may control a minimum number of edges to be detected, based on a parameter related to edge detection. As the parameter (e.g., the threshold) related to edge detection has a higher value, an image may become more abstract, and thus a relatively small amount of edge information may be detected. As the parameter (e.g., the threshold) related to edge detection has a lower value, an image may become relatively closer to an original image, and thus a relatively large amount of edge information may be detected.

According to an embodiment, the electronic device 200 may receive a drawing entered by the user via a drawing input receiver 308 under control of the processor 210. The drawing input may refer to an image entered by the user.

According to an embodiment, the electronic device 200 may display an interface to add a second user input on the first image, and may add the second user input to a first image area or a first image surrounding area, based on a user input on the interface. The second user input may include a drawing input.

Alternatively, the electronic device 200 may receive a second user input in a first image area or a first image surrounding area without displaying an interface. The first image may refer to an edge-detected image selected by the user. Alternatively, the first image may refer to an image of an area where the original image and an edge-detected image are overlaid and displayed. The electronic device 200 may display an interface on the first image to add a user input, or may receive a user input in the first image area or the first image surrounding area without displaying an interface.

According to an embodiment, the electronic device 200 may provide a user interface for selecting a plurality of detected edge images. The electronic device 200 may receive a user input for any one of the plurality of edge images through the interface. The electronic device 200 may receive a user input for an edge image closest to the shape of an object that the user wishes to generate through the interface. The electronic device 200 may display a user interface (drawing UI) for drawing, based on an edge image (e.g., the first image) being determined based on a user input. The electronic device 200 may recognize at least one input among an input using the user's finger, an input using an electronic pen, or an input using a mouse pointer. The electronic device 200 may additionally generate a user-desired object image on the first image, based on a user input to the drawing UI. Further, the electronic device 200 may modify a detected edge image, based on a user input to the drawing UI. When an image is completed based on a user input to the drawing UI, the electronic device 200 may provide the image as an input to a machine learning model.

According to an embodiment, the electronic device 200 may generate an object image by using an object image generation model 310 under control of the processor 210.

According to an embodiment, the electronic device 200 may generate a prompt to request image generation from a machine learning model, based on the first image and the second user input. In the machine learning model, the prompt may refer to an input for a user's question or request. The machine learning model may generate a corresponding response, based on a prompt. Information provided as the prompt may play a critical role in forming a response of the machine learning model.

The machine learning model may include an object image generation model 310. In another example, the machine learning model may include an object placement control model 320. The object image generation model 310 may serve to generate an image using a generative artificial intelligence model or a machine learning model, and the object placement control model 320 may serve to determine a position at which the generated image is to be placed on a background screen.

According to an embodiment, the electronic device 200 may provide one of an edge image or an edge image with a drawing added, which are transmitted from the drawing input receiver 308, as an input to the object image generation model 310. The object image generation model 310 may generate a completed object image, based on the edge information, and may output a result to which coloring and lighting effects are applied. The object image generation model 310 may be included in an on-device form in the electronic device 200, or may be disposed in the external server. The image output by the machine learning model may be stored in the server. The electronic device 200 may designate, as metadata, at least one of the keyword entered by the user, an address of a web page including the crawled image, and the prompt used to output the image, and may store the same in the server along with the image output by the machine learning model.

According to an embodiment, the electronic device 200 may determine a position in which the second image is to be displayed on a display, based on a user input. The electronic device 200 may obtain information about a color and brightness of a background screen on which the second image is displayed, and may change at least one of a color or brightness of the second image, based on the information about the color and brightness of the background screen. The background screen may refer to a background displayed in the original image, or may refer to a newly added background. The electronic device 200 may use the background of the original image as it is, or may add a new background, based on a user input. The second image may refer to a result image output by the object image generation model 310. A size of the second image may be the same as that of the original image. Alternatively, the size of the second image may have an image size corresponding to a portion of an area corresponding to the original image. The area corresponding to the original image may refer to an area including an edge image and a drawing input area.

The electronic device 200 may use a lighting controller 322 to measure the color and brightness of the second image and the background screen.

According to an embodiment, the electronic device 200 may generate a prompt to request generation of a sound corresponding to the first image and the second user input together with the image. The first image may refer to an edge image selected by the user. The second user input may refer to a drawing entered by the user on the first image. According to an embodiment, the electronic device 200 may move the first image or change a size or color of the first image, based on the second user input. The electronic device 200 may rotate the first image or horizontally flip the first image, based on the second user input.

The electronic device 200 may provide the generated prompt as an input to the object image generation model 310 or the machine learning model, and may receive the second image and sound information corresponding to the second image. The second image may include an image output by the machine learning model, based on the first image and the second user input. The sound information may include sound information associated with the second image. For example, when the second image includes an instrument (e.g., a guitar), the sound information associated with the second image may include a guitar sound. The instrument (e.g., the guitar) is merely an example, and the sound information is not limited thereto. The electronic device 200 may reproduce a sound, based on a user input (e.g., a touch input, a gesture input, or a voice input) for the second image.

According to an embodiment, the electronic device 200 may determine placement of an object image generated using the object placement control model 320 under control of the processor 210.

The object image generation model 310 and the object placement control model 320 may exist as separate machine learning models. That is, the object image generation model 310 may be included in a first machine learning model, and the object placement control model 320 may be included in a second machine learning model. Alternatively, the object image generation model 310 and the object placement control model 320 may be included in a single machine learning model and perform learning using different data, respectively.

According to an embodiment, the electronic device 200 may perform an operation of disposing a final object image (e.g., the second image) generated by the object image generation model 310 to harmonize with a surrounding background screen by using the object placement control model 320. The final object image (e.g., the second image) harmonizing with the background screen may mean that a difference between a color and brightness of the final object image and a color and brightness of the background screen is below a specified level. For example, when the brightness of the background image is a first level (e.g., 30 lux) but the brightness (e.g., 100 lux) of the finally generated second image differs from the first level by a level greater than the specified level, the electronic device 200 may relatively reduce the brightness of the second image. The mentioned brightness (e.g., 100 lux) is merely an example, and may vary according to a configuration.

Alternatively, when a different object is disposed on the background screen, the electronic device 200 may change a position where the second image is disposed such that the area of an overlapping portion of the disposed object and the second image is less than a specified level. Alternatively, when a different object is disposed on the background screen, the electronic device 200 may move the different object, and may dispose the second image in a center of the background screen.

According to an embodiment, a color may be represented by at least one of RGB values, hue, saturation, and lightness (HSL) values, or hue, saturation, and value (HSV) values. The electronic device 200 may use RGB values, a method of representing colors by combining intensities of three primary colors of light, which are red (R), green (G), and blue (B). The electronic device 200 may represent colors of images and a color of a background screen by values ranging from 0 to 255. For example, the electronic device 200 may determine that (255, 0, 0) indicates red, (0, 255, 0) indicates green, and (0, 0, 255) indicates blue. The electronic device 200 may represent various colors by combining RGB values.

Colors being similar may mean that a difference in RGB values is within a specified range (e.g., 20). The specified range (e.g., 20) is only an example, and may vary depending on a configuration. Hue, saturation, and lightness (HSL) or hue, saturation, and value (HSV) may refer to a method of representing colors. Hue is represented by a value ranging from 0 to 360 degrees, and various colors may be expressed by rotating along a color circle. Saturation refers to vividness of a color, and may be represented by a value ranging from 0 to 100%. Lightness or value refers to a brightness of a color, and may be represented by a value ranging from 0 to 100%. The electronic device 200 may represent colors more intuitively by using HSL and HSV than by using RGB. The electronic device 200 may represent similar or analogous colors using HSL and HSV.

Colors being similar or analogous may mean that a difference in hue values is within a specified range (e.g., 10 degrees). The specified range (e.g., 10 degrees) is only an example, and may vary depending on a configuration. The color of the second image being distinguished from the color of the background screen may mean that a difference in RGB values between the second image and the background screen exceeds a specified level (e.g., 30). The specified level (e.g., 30) is only an example, and may vary according to a configuration. Although the description is based on the RGB values, the electronic device 200 may determine whether colors are similar by compare hue, saturation, and lightness (HSL) or hue, saturation, and value (HSV).

According to an embodiment, when the user generates a new object on an empty screen, the electronic device 200 may dispose the generated object on the empty screen without using the object placement control model 320. However, when the user generates a new object on an existing image, the electronic device 200 may adjust disposition of the existing image and the new object by using the object placement control model 320. When positions of objects are completely designated based on a user input (e.g., a touch input or a drag input), the electronic device 200 may adjust brightness and colors of the objects to output a final image that is completely edited.

FIG. 4A and FIG. 4B illustrate an embodiment of an image editing method of an electronic device.

In drawing 402 of FIG. 4A, the electronic device (e.g., the electronic device 200 of FIG. 2) may determine a background screen under control of a processor (e.g., the processor 210 of FIG. 2). The background screen may be an empty screen or an image including an object.

In drawing 406 of FIG. 4A, the electronic device 200 may receive a user input for a position 405 where an object image is to be generated, and may display the position 405 where the object image is to be generated on the background screen.

In drawing 406 of FIG. 4A, the electronic device 200 may provide an interface for a user to input a word. The electronic device 200 may receive input of a word corresponding to an object to be added to an existing image or an empty canvas. The electronic device 200 may recommend an associated word by using an inference function when the user inputs a word. The electronic device 200 may recommend an associated word, thereby improving the user's input convenience.

In drawing 408 of FIG. 4A, the electronic device 200 may perform crawling, based on a word entered by the user, and may display crawled images on a display. The electronic device 200 may receive the word entered by the user, and may perform crawling.

In an embodiment, the electronic device 200 may perform crawling by inputting a keyword more specified based on a keyword entered by the user. The specified keyword may refer to a keyword that further includes an adjective or a modifier added to the word entered by the user. For example, the keyword entered by the user may be specified based on words which the user has frequently input on a virtual keyboard of the device.

As in 406 of FIG. 4A, when the word entered by the user is "vase," the device may change the keyword to "transparent vase," which the user has frequently input, and may perform crawling. This example is only for illustration, and text entered by the user and a specified keyword therefrom may vary depending on a configuration.

Alternatively, the electronic device 200 may analyze a mood of a background image, and may perform crawling after changing the keyword to a keyword corresponding to the background image. The electronic device 200 may analyze the mood of the background image, based on one of a color, brightness, or surrounding object of the background image. When performing crawling by changing the keyword, the electronic device 200 may perform crawling without notifying the user of the change of the keyword. Alternatively, the electronic device 200 may perform a process of confirming with the user whether to perform crawling using a changed keyword through a UI. When displaying a crawling result on the screen, the electronic device 200 may display the changed keyword on the screen together with the crawling result.

In drawing 410 of FIG. 4A, the electronic device 200 may perform edge detection on the crawled images, and may display edge images on the display. The electronic device 200 may perform edge detection on the images obtained through crawling. The electronic device 200 may adjust a preconfigured threshold to adjust an edge information detection level. The edge-detected images may be configured in a single bundle. The edge-detected images may be provided to the user in a slide form.

In drawing 412 of FIG. 4B, the electronic device 200 may receive a user input for a plurality of edge images on which the edge detection has been performed. The electronic device 200 may determine an edge image similar to an object intended by the user among the plurality of edge-detected images, based on the user input.

In drawing 414 of FIG. 4B, the electronic device 200 may display an edge image selected by the user on the background screen. A position where the selected edge image is displayed on the background screen may refer to the position 405 indicated in image 404.

In drawing 416 of FIG. 4B, the electronic device 200 may display a drawing user interface (UI) 426 to add a drawing input on the edge image selected by the user. The drawing user interface 426 may include, for example, a color palette for coloring.

According to an embodiment, the electronic device 200 may display a result according to a drawing input 430 entered through the drawing user interface 426. The electronic device 200 may display an additional image, based on a user input on the drawing UI 426. The user input on the drawing UI 426 may be entered using a body part (e.g., a hand) of the user. Alternatively, the user input on the drawing UI 426 may be entered using an external input device including an electronic pen or an input tablet. The drawing UI may include a pen, an eraser, a blur effect, and a palette for coloring. Alternatively, the electronic device 200 may receive a second input of the user on the first image without displaying the drawing user interface (UI) 426. The drawing user interface (UI) 426 may be a component for assisting the user's input, and may not be essential.

In drawing 418 of FIG. 4B, the electronic device 200 may provide the image generated in drawing 416 to a machine learning model as an input. The image generated in drawing 416 may refer to an image in which the user's drawing input is added to the edge image. The electronic device 200 may output an image with coloring and lighting effects applied using the machine learning model. In addition, the electronic device 200 may generate sound information related to the image by using the machine learning model.

In drawing 420, the electronic device 200 may display the image with the coloring and lighting effects applied, which is output from the machine learning model. The electronic device 200 may play a sound based on the sound information, based on a user input (e.g., a touch input, a gesture input, or a voice input) for the displayed image.

According to an embodiment, the electronic device 200 may output the sound in combination when a user input is detected on the completed object. For example, when the object is an instrument, the electronic device 200 may output an instrument sound, and when the object is a cup made of a steel material, the electronic device 200 may output a sound corresponding to the material. The electronic device 200 may expand the user experience and provide information regarding which object the generated image represents by using the output sound.

According to an embodiment, the electronic device 200 may change information about a color and brightness (lighting) of the generated object. The electronic device 200 may analyze the background screen and the generated object, and may adjust the position where the generated object is disposed.

FIG. 5A and FIG. 5B illustrate another embodiment of an image editing method of an electronic device.

In drawing 502 of FIG. 5, the electronic device (e.g., the electronic device 200 of FIG. 2) may receive input of a keyword under control of a processor (e.g., the processor 210 in FIG. 2). The electronic device 200 may determine the keyword based on a user input. The user input may include at least one of a touch input on a keyboard or a voice input.

In drawing 504 of FIG. 5A, the electronic device 200 may perform crawling based on the determined keyword.

In drawing 506 of FIG. 5A, the electronic device 200 may display at least some of images retrieved by the crawling on a display. The electronic device 200 may determine one cup image, based on a user input for any one of the displayed images.

In drawing 508 of FIG. 5A, the electronic device 200 may perform edge detection on the determined one cup image. The electronic device 200 may perform edge detection on the cup image selected by a user to obtain an edge image. The electronic device 200 may display the obtained edge image (e.g., a first image) on the display.

In drawing 510 of FIG. 5B, the electronic device 200 may additionally receive a drawing input 530 on the edge image or around the edge image. The drawing input 530 may be entered with a body part (e.g., a hand) of the user or with an external device (e.g., a stylus pen). The electronic device 200 may separately display a user interface for assisting the drawing input 530.

In FIG. 512 of FIG. 5B, the electronic device 200 may generate an image using a machine learning model. The electronic device 200 may generate a prompt to request image generation based on the edge image and the added drawing input, and may provide the generated prompt to the machine learning model. In the machine learning model, the prompt may refer to an input for a user's question or request. The machine learning model may generate a corresponding response, based on the prompt. Information provided as the prompt may play a critical role in forming a response of the machine learning model. For example, the prompt may be generated in the following form: "Identify positions where indicators (e.g., an image or an object) are displayed on a background screen, and change a color of each indicator so that the indicators are distinguishable from the background screen." For example, the object may refer to a cup, and the image may refer to steam (or water vapor) on the cup.

In drawing 514 of FIG. 5B, the electronic device 200 may display the image output from the machine learning model on the display.

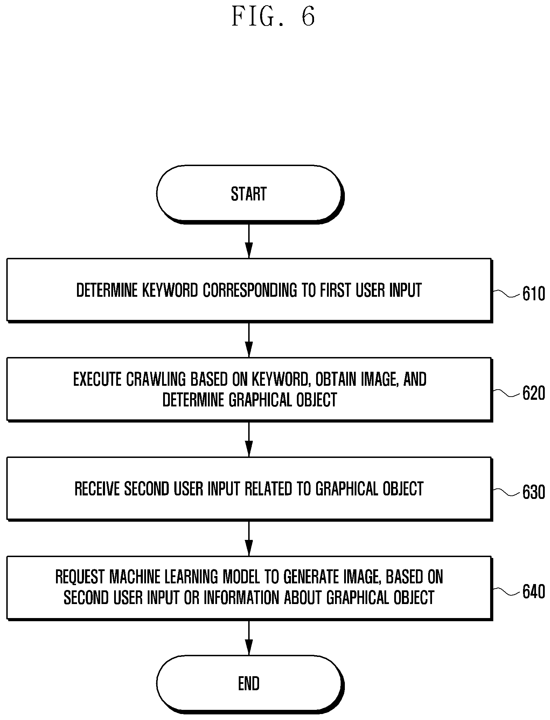

FIG. 6 is a flowchart illustrating an image editing method of an electronic device according to various embodiments.

Operations illustrated in FIG. 6 may be implemented based on instructions which may be stored in a computer recording medium or a memory (e.g., the memory 130 of FIG. 1). The illustrated method 600 may be executed by the electronic device (e.g., the electronic device 101 of FIG. 1 or the electronic device 200 of FIG. 2) described above with reference to FIG. 1 to FIG. 5B, and the aforementioned technical features will be omitted below. The operations in FIG. 6 may be performed in a different order, some operations may be omitted, and some operations may be performed simultaneously.

In operation 610, the electronic device 200 may determine a keyword corresponding to a first user input under control of a processor (e.g., the processor 210 of FIG. 2). The electronic device 200 may provide a search UI to receive a word for an object image which the user wishes to add.

In operation 620, the electronic device 200 may execute crawling based on the keyword, and may obtain at least one image. Here, the electronic device 200 may determine at least graphical object of the image through edge detection on the at least one image. The at least one graphical object may be referred to as a first image. The electronic device 200 may perform crawling, based on a received word (keyword). The electronic device 200 may limit the number of images to be retrieved by crawling, based on a preconfigured criterion. The electronic device 200 may perform edge detection on a crawled image.

According to an embodiment, the electronic device 200 may control a minimum number of edges to be detected, based on a parameter related to edge detection. As the parameter (e.g., a threshold) related to edge detection has a higher value, an image may become more abstract, and thus a relatively small amount of edge information may be detected. As the parameter (e.g., the threshold) related to edge detection has a lower value, an image may become relatively closer to an original image, and thus a relatively large amount of edge information may be detected. The electronic device 200 may display images obtained by performing edge detection to a user by using various UI forms (e.g., a slide). The electronic device 200 may determine at least one edge image, based on a user input.

In operation 630, the electronic device 200 may receive a second user input related to the at least one graphical object. In addition, the electronic device 200 may display an interface to add the second user input on or around the at least one graphical object, and may add the second user input. Alternatively, the electronic device 200 may receive a user input on the at least one graphical object without displaying an interface. The interface may be a component for assisting the user's input or drawing, and may not be essential.

According to an embodiment, the electronic device 200 may display a drawing UI for inputting a drawing, based on an edge image being selected by the user. The electronic device 200 may display an additional image, based on a user input on the drawing UI. The user input on the drawing UI may be entered using a body part (e.g., a hand) of the user. Alternatively, the user input on the drawing UI may be entered using an external input device including an electronic pen or an input tablet. The drawing UI may include a pen, an eraser, a blur effect, and a palette for coloring.

In operation 640, the electronic device 200 may request a machine learning model to generate an image, based on the second user input or information about the at least one graphical object.

According to an embodiment, the electronic device 200 may provide an edge image generated by the second user input as an input to the machine learning model. The machine learning model may output an object image to which coloring and lighting information is applied, based on the edge image generated by the second user input. The electronic device 200 may display the image to which coloring and lighting effects are applied, which is output from the machine learning model, on a display. The electronic device 200 may play a sound based on sound information, based on a user input (e.g., a touch input, a gesture input, or a voice input) for the displayed image. The electronic device 200 may expand the user experience and provide information regarding which object the generated image represents by using the output sound.

According to an embodiment, the electronic device 200 may dispose the final object image (e.g., a second image) generated by the machine learning model to harmonize with a surrounding background screen. The final object image (e.g., the second image) harmonizing with the background screen may mean that a difference between a color and brightness of the final object image and a color and brightness of the background screen is below a specified level. The electronic device 200 may analyze the background screen using the machine learning model. The electronic device 200 may receive information about a coordinate where the completed object image is disposed, and may analyze the background screen to compare the coordinate with a display coordinate of the object in the background screen. The electronic device 200 may determine the coordinate where the completed object image is disposed in consideration of the coordinate of the object in the background screen.

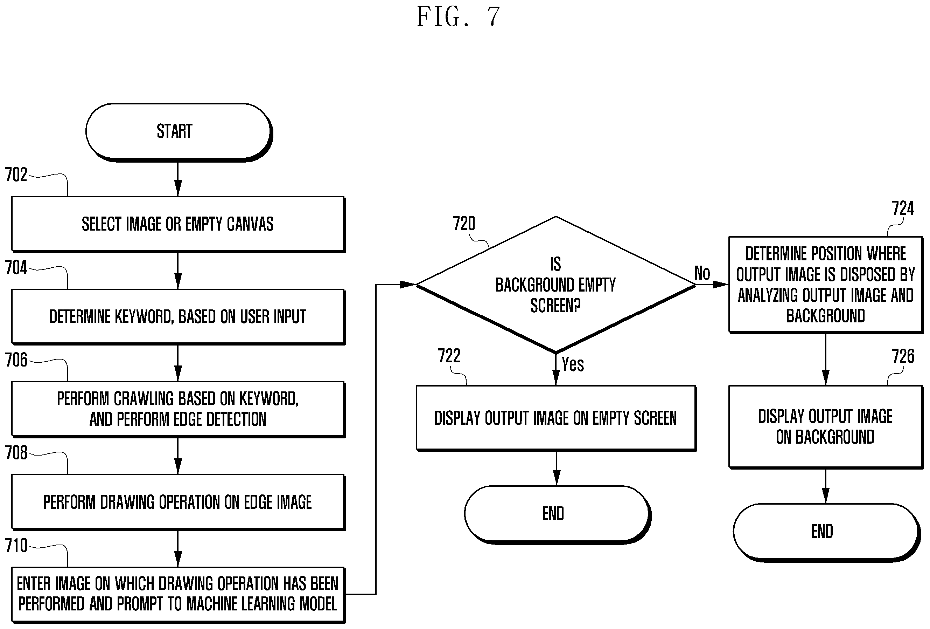

FIG. 7 is a flowchart illustrating an image editing method of an electronic device according to various embodiments.

Operations illustrated in FIG. 7 may be implemented based on instructions which may be stored in a computer recording medium or a memory (e.g., the memory 130 of FIG. 1). The illustrated method 700 may be executed by the electronic device (e.g., the electronic device 101 of FIG. 1 or the electronic device 200 of FIG. 2) described above with reference to FIG. 1 to FIG. 5B, and the aforementioned technical features will be omitted below. The operations in FIG. 7 may be performed in a different order, some operations may be omitted, and some operations may be performed simultaneously.

In operation 702, the electronic device 200 may determine one of an image or an empty canvas under control of a processor (e.g., the processor 210 of FIG. 2).

In operation 704, the electronic device 200 may determine a keyword, based on a user input. According to an embodiment, the electronic device 200 may receive a first user input, and may determine a keyword corresponding to the user input. The first user input may include, for example, any one of a text input or a voice input.

In operation 706, the electronic device 200 may perform crawling based on the keyword, and perform edge detection. The electronic device 200 may perform crawling to obtain at least one image, based on the determined keyword. The electronic device 200 may determine at least one image corresponding to the crawling. The electronic device 200 may perform edge detection on the at least one image corresponding to the crawling to obtain a first image.

According to an embodiment, the electronic device 200 may control the number of images corresponding to crawling to be less than a preconfigured level. The electronic device 200 may perform edge detection on at least one crawled image, and may provide an interface for receiving a user input for any one among the images on which the edge detection has been performed. The electronic device 200 may determine a first image, based on a user input on the interface. The first image may refer to an edge image selected by a user.

According to an embodiment, the electronic device 200 may control the number of images corresponding to crawling to be less than a preconfigured level. The electronic device 200 may receive a user input for one of the images corresponding to crawling, and may perform edge detection on the image to which the user input is applied, thereby determining a first image.

In operation 708, the electronic device 200 may perform a drawing operation on the edge image. The electronic device 200 may display an interface (e.g., a drawing UI) to add a second user input on the first image, and may add the second user input onto the first image, based on a user input on the interface. The second user input may include at least one of a touch input, a gesture input, or a voice input on the interface. The type of the second user input is only an example, and is not limited thereto.

In operation 710, the electronic device 200 may enter the image on which the drawing operation has been performed and a prompt to a machine learning model or an artificial intelligence learning model. The electronic device 200 may generate a prompt to request image generation from the machine learning model, based on the first image and the second user input. The electronic device 200 may provide the generated prompt as an input to the machine learning model, may receive a second image output from the machine learning model, and may display the second image on a display.

According to an embodiment, when generating the prompt, the electronic device 200 may generate the prompt, based on at least one of the first user input or the keyword, the first image, and the second user input. The prompt may refer to an instruction to request image generation from the machine learning model. The electronic device 200 may provide the generated prompt as an input to the machine learning model to request image output.

In operation 720, the electronic device 200 may determine whether a background is an empty screen or an image including an object.

In operation 722, the electronic device 200 may display the image output from the machine learning model as it is, based on a background screen being an empty screen.

In operation 724, the electronic device 200 may determine a position where the image output from the machine learning model is disposed on the background screen, based on the background image being an image including an object rather than an empty screen. The electronic device 200 may determine a position where the second image is displayed on the display, based on a user input. The electronic device 200 may obtain information about a color and brightness of the background screen on which the second image is displayed, and may change at least one of a color or brightness of the second image, based on the information about the color and brightness of the background screen. The electronic device 200 may analyze the background screen and the generated object, and may adjust a position where the generated object is disposed.

According to an embodiment, the electronic device 200 may disposed the final object image (e.g., the second image) generated by the machine learning model to harmonize with the surrounding background screen. The final object image (e.g., the second image) harmonizing with the background screen may mean that a difference between a color and brightness of the final object image and the color and brightness of the background screen is below a specified level. The electronic device 200 may analyze the background screen using the machine learning model. The electronic device 200 may receive information about a coordinate where the completed object image is disposed, and may analyze the background screen to compare the coordinate with a display coordinate of the object in the background screen. The electronic device 200 may determine the coordinate where the completed object image is disposed in consideration of the coordinate of the object in the background screen.

In operation 726, the electronic device 200 may display the image output from the machine learning model on the background screen, based on the position where the image is disposed being determined.

According to an embodiment, the electronic device 200 may generate an image in which the background image and the generated object image are synthesized or merged, based on the position where the image is disposed being determined. The electronic device 200 may store the generated image in a memory (e.g., the memory 220 of FIG. 2).

According to an embodiment, an electronic device may determine at least one graphical object by performing edge detection on at least one image.

According to an embodiment, the electronic device may generate a prompt to request image generation, based on the keyword corresponding to the first user input, the at least one graphical object, and the second user input, provide the generated prompt to the machine learning model, and receive a second image output from the machine learning model to display the same on a display. The electronic device may determine a position where the second image is displayed on the display, based on a user input, obtain information about a color and brightness of a background screen on which the second image is displayed, and change at least one of a color or brightness of the second image, based on the information about the color and brightness of the background image.

According to an embodiment, the electronic device may control the number of images corresponding to crawling to be less than a preconfigured level, and perform edge detection on at least one image for which crawling has been completed. The electronic device may provide an interface for receiving a user input for one of images on which edge detection has been performed, and determine the at least one graphical object, based on a user input on the interface.

According to an embodiment, the electronic device may control the number of images corresponding to crawling to be less than a preconfigured level, determine one image, based on a user input for a corresponding image, and determine the at least one graphical object by performing edge detection on the determined image.

According to an embodiment, the electronic device may control a minimum number of edges to be detected, based on a parameter related to edge detection. As the parameter related to edge detection has a higher value, an image may become relatively more abstract, and a degree of representation as edges may increase, and the parameter related to edge detection has a lower value, an image may become relatively closer to an original image, and a degree of representation as edges may decrease.

The embodiments of the disclosure disclosed in the specification and the drawings are presented only as specific examples to easily explain technical content according to the embodiments of the disclosure and to help understanding of the embodiments of the disclosure, and are not intended to limit the scope of the embodiments of the disclosure. Therefore, the scope of the disclosure should be interpreted as including all modifications or variations derived from the technical idea of the disclosure as well as the embodiments disclosed herein.

## Claims

1. An electronic device comprising:
a memory storing instructions;
a display; and
at least one processor,
wherein the instructions, when executed by the at least one processor, control the electronic device to:
based on receiving a first user input, determine a keyword corresponding to the first user input;
based on the determined keyword, obtain at least one image through crawling;
determine at least one graphical object corresponding to the at least one image;
receive a second user input related to the at least one graphical object; and
based on the second user input or information on the at least one graphical object, generate an artificial intelligence (AI) image using a machine learning model.

2. The electronic device of claim 1, wherein the electronic device is configured to determine the at least one graphical object by performing edge detection on the at least one image.

3. The electronic device of claim 1, wherein the electronic device is configured to:
based on the keyword corresponding to the first user input, the at least one graphical object, and the second user input, generate a prompt to request image generation;
provide the generated prompt as an input to the machine learning model;
receive a second image output from the machine learning model and display the second image on the display;
based on a user input, determine a position where the second image is to be displayed on the display;
obtain information on a color and brightness of a background screen on which the second image is displayed; and
based on the information on the color and brightness of the background image, change at least one of a color or brightness of the second image.

4. The electronic device of claim 1, wherein the electronic device is configured to:
perform control such that a number of images corresponding to crawling is less than a preconfigured level;
perform edge detection on at least one image for which crawling has been completed, and provide an interface capable of receiving a user input for one of images on which edge detection has been performed; and
based on a user input to the interface, determine the at least one graphical object.

5. The electronic device of claim 1, wherein the electronic device is configured to:
perform control such that a number of images corresponding to crawling is less than a preconfigured level;
determine one image, based on a user input for a corresponding image; and
determine the at least one graphical object by performing edge detection on the determined image.

6. The electronic device of claim 1, wherein the electronic device is configured to, based on a parameter related to edge detection, perform control such that a minimum number of edges are detected,
wherein, as the parameter related to edge detection increases, an image becomes relatively more abstract and a degree of representation as edges increases, and
wherein, as the parameter related to edge detection decreases, an image becomes relatively closer to an original image and a degree of representation as edges decreases.

7. The electronic device of claim 1, wherein the electronic device is configured to:
generate a prompt to request generation of a sound corresponding to the at least one graphical object and the second user input, together with the image; and
provide the generated prompt as an input to the machine learning model to receive a second image and sound information corresponding to the second image,
wherein the second image comprises an image generated by the machine learning model, based on the at least one graphical object and the second user input, and
wherein the sound information comprises sound information related to the second image.

8. The electronic device of claim 7, wherein the electronic device is configured to, based on a user input for the second image, output music based on the sound information through a speaker, and
wherein the user input for the second image comprises at least one of a gesture, a voice input, or a touch input.

9. The electronic device of claim 1, wherein the first user input for determining the keyword comprises one of a text input (touch input) or a voice input.

10. The electronic device of claim 1, wherein the electronic device is configured to, when generating the prompt:
based on at least one of the first user input or the keyword, the at least one graphical object, and the second user input, generate a prompt to request image generation from the machine learning model; and
provide the generated prompt as an input to the machine learning model to request image output.

11. An operation method comprising:
based on receiving a first user input, determining a keyword corresponding to the first user input;
based on the determined keyword, obtaining at least one image through crawling;
determining at least one graphical object corresponding to the at least one image;
receiving a second user input related to the at least one graphical object; and
based on the second user input or information on the at least one graphical object, generating an artificial intelligence (AI) image using a machine learning model.

12. The method of claim 11, further comprising determining the at least one graphical object by performing edge detection on the at least one image.

13. The method of claim 11, further comprising:
based on the keyword corresponding to the first user input, the at least one graphical object, and the second user input, generating a prompt to request image generation;
providing the generated prompt as an input to the machine learning model;
receiving a second image output from the machine learning model to display the second image on a display;
based on a user input, determining a position where the second image is to be displayed on the display;
obtaining information on a color and brightness of a background screen on which the second image is displayed; and
based on the information on the color and brightness of the background image, changing at least one of a color or brightness of the second image.

14. The method of claim 11, further comprising:
performing control such that a number of images corresponding to crawling is less than a preconfigured level;
performing edge detection on at least one image for which crawling has been completed;
providing an interface capable of receiving a user input for one of images on which edge detection has been performed; and
based on a user input to the interface, determining the at least one graphical object.

15. The method of claim 11, further comprising:
performing control such that a number of images corresponding to crawling is less than a preconfigured level;
determining one image, based on a user input for a corresponding image; and
determining the at least one graphical object by performing edge detection on the determined image.
